# EUROPEAN PATENT SPECIFICATION

(11) **EP 1 401 205 B1**
(45) Date of publication and mention of the grant of the patent: **25.04.2012**
(21) Application number: 02360261.8
(22) Date of filing: 05.09.2002
(51) Int. Cl.: G08B 25/08, H04N 21/472, H04N 21/61, H04N 21/462, H04N 21/4223, H04N 21/4227, H04N 21/4782, H04N 21/2187, H04N 7/18

(54) **Monitoring support server**
Server zur Überwachungsunterstützung
Serveur d'assistance pour la surveillance

(43) Date of publication of application: 24.03.2004
(73) Proprietor: Alcatel Lucent, 75007 Paris (FR)
(72) Inventor: Banet, Franz-Josef, Dipl.-Ing., 71665 Vaihingen (DE); Jenisch, Markus, Dipl.-Ing., 71336 Waiblingen (DE); Kostering, Nina, Dipl.-Ing., 70499 Stuttgart (DE); Lautenschlager, Wolfgang, Dipl.-Ing., 70499 Stuttgart (DE)
(74) Representative: Schmidt, Werner Karl

(56) References cited:
- WO-A-00/72573
- WO-A-01/13637
- GB-A- 2 325 548
- US-B1- 6 334 152

## Description

The present invention relates to a method for monitoring an object or person by means of transmitting an audio and/or video data stream via communication network from a sending terminal to a selected receiving terminal, a server for supporting the monitoring of objects or a pers9ons by means of transmitting audio and/or video data streams via a communication network from sending terminals to selected receiving terminals and a terminal for controlling the monitoring of objects or persons by means of transmitting audio and/or video data streams via a communication network from sending terminals to selected receiving terminals.

Present communication systems only allow in-house surveillance of objects or persons.

For example, US 6,107,918 A describes a PC-based room security system for monitoring the environment surrounding a PC in order to detect suspicious or uncharacteristic events. This home security system first monitors the environment, listening and watching for a threshold event. When a threshold event is detected, the security system performs close surveillance of the environment in order to detect and characterize additional events. When the accumulated detected events exceed some threshold value, the security system diagnoses the events and takes a predetermined action. It calls, for example, a specific telephone number via a modem and sends specific messages through the modem to a receiving party. For example, it may transmit to a predetermined telephone number a voice-type message which includes the address of the house and indicating it is believed that an intruder has broken into the house.

Further, a wide variety of simple surveillance systems are known which based on a wireless point to point transmission of audio data. Audio data recorded in one room of the house are transmitted to a receiving terminal located in an other room of the house. Such surveillance systems are for example used to supervise children.

WO 01/13637 A1 discloses a system and a method for digital video management. The digital video management system includes a video server, a plurality of cameras, and at least one client computer terminal, all linked via a computer communications network, wherein said video server receives video signals from said cameras, and provides said video signals to said client, via said network.

WO 01/78397 A1 discloses an object monitoring system and a corresponding method including a slave system having slave processors and a plurality of cameras for monitoring one or more objects, images of the cameras being processed by respective ones of the slave processors. A master system has a master processor including agents assigned to at least one of the objects and having one or more of the sensors allocated thereto, the agents each generating an event on receiving triggers from the one or more allocated sensors. An event system receives the events and determines whether an alarm condition exists.

US 6,215,781 B1 discloses a video transmitting apparatus having a plurality of transmission media for transmitting multiplexed video information, a plurality of video information receiving units each connected to a corresponding transmission medium to receive specific video information, a video displaying unit for displaying video information, a switcher for connecting the video displaying unit to any one of the video information receiving units to supply video information to the video displaying unit, and a video display requesting unit. The video display requesting unit is a personal computer or control console.

It is the object of the present invention to improve the flexibility of the present surveillance systems.

The object of the present invention is achieved by a method for monitoring an object or a person according to claim 1

. The object of the present invention is further achieved by a server according to claim 5. The object of the present invention is further achieved by a terminal according to claim 6.

The present invention enables a supervising person to monitor a wide variety of different objects or persons. These objects or persons might be locally distributed and might be monitored by different locally distributed sending terminals. The supervising person is not bound to a specific receiving terminal, but may perform his monitoring tasks by using an arbitrary one of different locally distributed receiving terminals. By this, the flexibility and the user-friendless of the surveillance system are drastically improved.

Further, the technical complexity of the receiving terminals is reduced by help of the invention. Really simple receiving terminals, which are TV sets (TV = Television), are used as receiving terminals. The transmission of the audio and/or video data stream is controlled by a separate terminal, the requesting terminal. Complex service specific functions have not to be implemented in each of the receiving terminals, but have to be only implemented in one requesting terminal. Thereby, the complexity of the whole surveillance system is reduced, processing power and data storage is saved and the number of potential receiving terminals is drastically increased.

Further advantages are achieved by the embodiments indicated by the dependent claims.

A save and powerful authorization of the requesting terminal towards the server is achieved by executing a first authorization procedure for identifying the requesting terminal between the requesting terminal and the access network used by the requesting terminal for communicating with the server, and using the results of this first authorization procedure within a second authorization procedure executed between the access network and the server. For example, an already performed authorization procedures for gaining access to the communication service of the mobile network can be used as first authorization procedure. Thereby, a single authorization procedure is used for both, for accessing the communication service provided by the mobile network and for accessing the monitoring service provided by the server.

Further advantages are achieved by using a terminal as requesting terminal which is equipped with a SIM-Card (SIM= Subscriber Identity Module). In this case, authorization data stored on the SIM card can be used as bases for an authorization procedure executed between the requesting terminal and the server. Authorization data has not to be entered into the requesting terminal and may be easily transferred from one requesting terminal to another requesting terminal by replacing the SIM-Card.

Further advantages are achieved by storing addresses of sending terminals and/or receiving terminals on the SIM-card assigned to the requesting terminal. This enables the requesting terminal to support or perform the selection of sending terminals and/or receiving terminals without exchanging data with other entities.

Further, it is possible to store addresses of sending terminals and/or receiving terminals on the server and select such addresses by means of the requesting terminal. By this, the addresses of sending terminals and/or receiving terminals can be centrally administrated and updated. High safety and security requirements are fulfilled by such kind of implementation of the invention.

To prevent a misuse of the audio and/or data stream generated by a sending terminal, an additional authorization procedure is executed between the server and the sending terminal.

According to a preferred embodiment of this invention the mobile phone is a mobile phone with GPRS capabilities (GPRS = General Packet Radio Service) and is used as requesting terminal. The always-on-functionality of such a packet based GPRS connection increases the speed and user-friendlyness of the surveillance system. Further, the use of such kind of connection saves cost compared with the use of a circuit switched connection.

Further advantages are achieved by using a program encoded in a platform independent programming language executed by the requesting terminal and controlling the interaction with the server. This enables the provision of a powerful user interface and reduces the data which has to be exchanged between the requesting terminal and the server.

These as well as other features and advantages of the invention will be better appreciated by reading the following detailed description of presently preferred exemplary embodiments taken in conjunction with accompanying drawings of which:
- Fig. 1: is a block diagram which shows a surveillance system comprising a server and a requesting terminal according to the present invention.
- Fig. 2: is a block diagram showing the detailed structure of the server and the requesting terminal of Fig. 1.

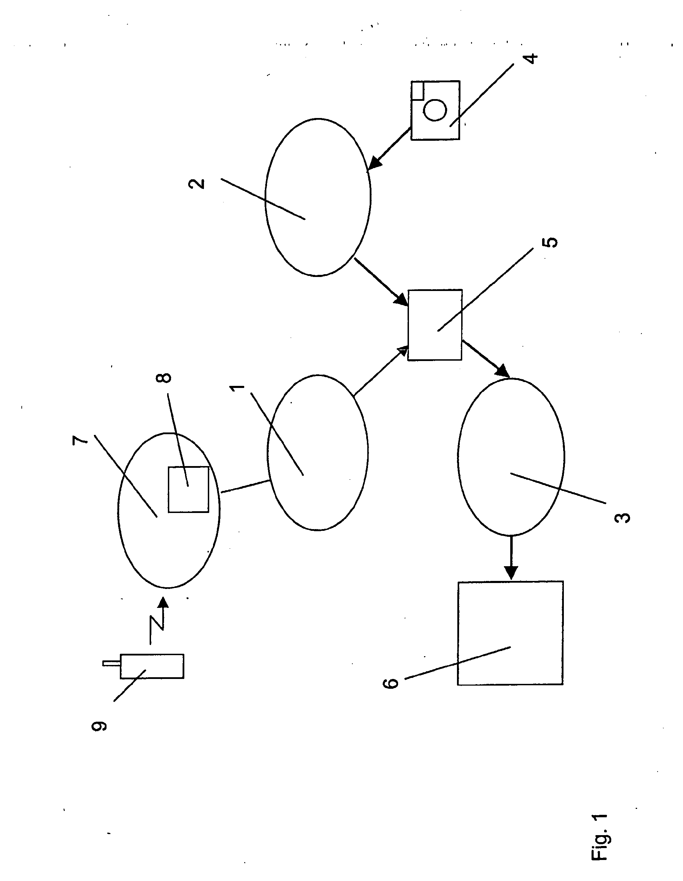

Fig. 1 shows a sending terminal 4, a receiving terminal 6, a requesting terminal 9, a server 5 and four communication networks 1, 2, 3 and 7.

The communication networks 1 and 2 are IP networks (IP = Internet Protocol). These kinds of networks use an internet protocol as level three communication protocol. They can be constituted of various physical communication networks which can use different lower level and higher level communication protocols.

For example, the communication network 2 is formed by a PSTN network (PSTN = Public Switched Telecommunication Network) or an ISDN network (ISDN = Integrated Server Digital Network), and one or several data networks, for example, ATM-networks (ATM = Asynchronous Transfer Mode), DQDB networks (DQDB = Distributed Queue Dual Bus) or Ethernet networks. The communication network 1 is a pure data network, for example, according to one of the above mentioned standards.

It is also possible that the communication networks 1 and 2 comprise one or several wireless communication networks, for example, a wireless LAN network, a GSM network (GSM = Global System for Mobile Communication) or an UMTS network (UMTS = Universal Mobile Telecommunications System).

The communication network 3 is a cable network, for example, a HFC network (HFC = Hybrid Fiber Coax). But, it is also possible to use for the communication network 1 the same kind of networks as for the communication networks 1 and 2.

The communication network 7 is a mobile communication network, for example as a cellular network like a GSM network or an UMTS network (GSM = Global System for Mobile communication; UMTS = Universal Mobile Telecommunications System). The communication network 7 comprises a gateway 8.

The gateway 8 is responsible for the exchange of data between the communication networks 7 and 1. The sending terminal 4 comprises a camera, a microphone and a control unit which enables the transmission of audio and video data generated by the camera and the microphone. For example, the control unit is formed by a PC which is equipped with a modem for exchanging data via the communication network 2. But, it is also possible that the sending terminal 4 is formed by a simple video camera which permanently sending a data stream, e. g. by help of the IP protocol, via a switched connection to the server 5. Further, this camera can be connected with the communication network 2 through a PC, Laptop or communication interface. It is further possible that the video camera is connected with the network 2 via a wireless interface, for example, a Bluetooth interface or a wireless LAN interface.

The receiving terminal 6 is a TV set which is connected via a Set Top Box with the communication network 3. Further, the receiving terminal 6 can be constituted by a PC or by a Laptop which is equipped with a communication card for communicating via the communication network 3, for example, with a wireless LAN card, a modem or an Ethernet card.

The requesting terminal 9 is a mobile phone. According to a preferred embodiment of this invention, the requesting terminal 9 is a mobile phone equipped with GPRS functionalities (GPRS = General Packet Radio Service) and with functionalities to execute programs encoded in a platform independent programming language.

The server 5 is constituted by a single computer or by several interlinked computers forming a hardware platform and by various software-programs executed by this hardware-platform and controlling the functions performed by the server 5.

The surveillance system shown by fig. 1 could have one or a plurality of sending terminals 4, one a several servers 5 and one or a plurality of receiving terminals 6. Further, the system could comprise one or several requesting terminals 9 each allocated to a specific supervising person.

The surveillance system performs the following steps to monitor an object or person located in the area of the sending terminal 4:

The requesting terminal 9 sends via the communication networks 7 and 1 a request to the server 5. This request requests the transmission of an audio or video data stream from the sending terminal 4 to a selected terminal, the receiving terminal 6. This request is formed by one or several messages transmitted via the air interface of the requesting terminal 9 to the gateway 8 and forwarded by the gateway 8 to the server 5 via the communication network 1.

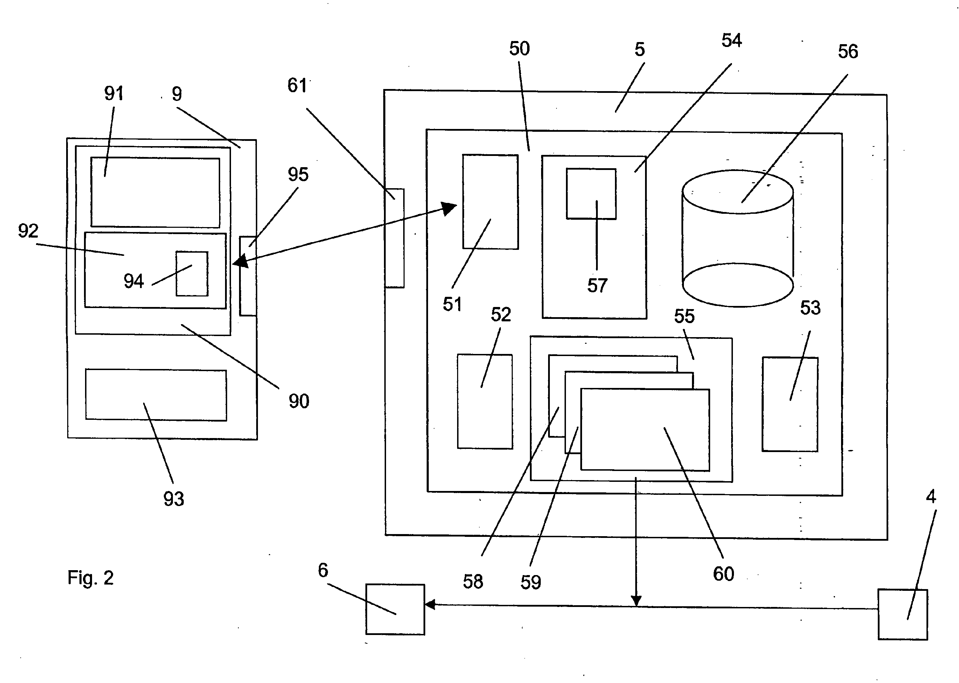

The server 5 checks the authorization of the requesting terminal 9 to access the data stream generated by the sending terminal 4. There exist various possibilities to check the authorization of the requesting terminal 9 which will be discussed in detail in conjunction with fig. 2. If this authorization does not fail, the server 5 establishes a connection between the sending terminal 4 and the selected receiving terminal 6. This connection might be a circuit switch connection between the sending terminal 4 and the receiving terminal 6. But, it could be also a packet based connection, for example based on the RTP-protocol (RTP = Real Time Protocol).

In the following, the detailed structures of the server 5 and the terminal 9 as well as the details of the performed methods are described by hand of fig. 2:

Fig. 2 shows the sending terminal 4, the receiving terminal 6, the server 5 and the requesting terminal 9.

The requesting terminal 9 is a mobile phone according to the GSM-standard (GSM = Global System for Mobile Communication) which comprises functionalities for processing the GPRS protocol stack and which comprises a virtual machine for executing programs encoded in a platform independent programming language. But, it is also possible that requesting terminal 9 does not comprise means for processing the GPRS protocol stack and uses a circuit switched connection for the exchange of data, in particular combined with the use of the WAP protocol.

The requesting terminal 9 comprises a SIM-card 93, a communication interface 95 and a data processing unit 90. The SIM-card 93 is connected via a removable connection with the data processing unit 90. The SIM-card 93 is formed by a small chip card which comprises memory means for storing subscriber identification information, for example, the so-called IMSI and an associated encryption key (IMSI = International Mobile Subscriber Identity). Further, additional data can be stored in the memory means of the SIM-card 93.

The communication interface 95 is used to enable the physical connection between the requesting terminal 9 and the mobile communication network 7. The communication interface 95 is formed by an antenna which enables the wireless communication between the terminal 9 and the base stations of the mobile communication network 7.

The data processing unit 90 is constituted by one or several microprocessors, memory chips and/or chips assigned to peripheral functions forming a hardware platform and a plurality of software programs executed by this hardware platform. The functions of the requesting terminal, which are specified in the following, are provided by the execution of these software programs by the above specified hardware platform of the requesting terminal 9.

Some of the software programs of the data processing unit 90 build a JAVA virtual machine 92 (JVM = Java Virtual Machine) which enables the execution of a JAVA program 91 that is stored in the memory means of the data processing unit 90. The JAVA program 91 can be replaced by any kind of program encoded in a platform independent programming language. For example, the JAVA program 91 could be replaced by a program encoded in the .net language. In that case, the JAVA virtual machine 92 has to be replaced by an appropriate virtual machine (.net: CLR = Common Language Run Time) adapted to the respective platform independent programming language.

The data processing unit 90 is arranged to send a request for requesting the transmission of an audio and/or video data stream from a sending terminal to a selected receiving terminal to a server and thereby inducing the server to check the authorization of the requesting terminal to access the data stream generated by the sending terminal and to establish a connection between the sending terminal and the selected receiving terminal.

The interaction between the requesting terminal 9 and the server 5 is controlled by the JAVA program 91. The GPRS-protocol is used for the communication via the air interface. But, it is also possible to build up a circuit switch connection between the requesting terminal 9 and the gateway 8 of the mobile communication network 7. Since the GPRS-protocol is a packet based protocol, the time needed to establish a connection between the requesting terminal 9 and the gateway 8 is saved and the service quality is thereby improved.

The gateway 8 transmits the messages exchanged between the requesting terminal 9 and the server 5 via a TCP/IP protocol stack. The communication between the requesting terminal 9 and the gateway 8 can base on the WAP-protocol (WAP = Wireless Application Protocol), HTTP protocol (HTTP = Hypertext Transfer Protocol) or directly on an IP-protocol (IP = Internet Protocol). If the communication between the requesting terminal 9 and the gateway 8 is performed by help of the WAP-protocol, an appropriate protocol conversion has to be performed by the gateway 8.

The IP-protocol is used for the end to end communication between the JAVA-program 91 and the server 5. But, it is also possible that the HTTP-protocol or a similar protocol is used for this end-to-end communication (HTTP = Hypertext Transfer Protocol). The JAVA virtual machine 92 already comprises respective subroutines 94 which enable the JAVA program 91 to use this protocol for the end to end communication.

The detail functions performed by the JAVA program 91 are described in the following in conjunction with the detailed description of the functionalities provided by the server 5.

The server 5 comprises a communication interface 61 and a data processing unit 50.

The communication interface 61 is a connector enabling the physical connection between the server 5 and the communication networks 1, 2 and 3. Since it is possible that the communication networks 1, 2 and 3 are formed by a single network, the communication interface 61 can be a simple plug enabling to connect the server 5, for example, with a LAN (LAN = Local Area Network).

The data processing unit 50 is constituted by a single computer or several interconnected computers forming a hardware platform and by a plurality of software programs forming a software platform and a plurality of application programs. The following described functionalities of the data processing unit 50 are provided by the execution of the application programs of the data processing unit 50 by the above described hardware and software platform.

According to a functional point of view, the data processing unit 50 comprises a data base 56, three communication units 51, 52 and 53 and two control units 54 and 55.

The communication unit 51, 52 and 53 comprise the functionalities which are necessary to communicate via the communication networks 1, 2 and 3, respectively. They comprise, for example, the respective software and hardware components for handling the respective protocol stacks.

The control unit 54 is responsible for the interaction with the JAVA program 91 of the requesting terminal 9. The control unit 55 is responsible for the establishment and administration of connections between sending terminals and selected receiving terminals.

The following describes the interaction between the JAVA program 91 of the requesting terminal 9 and the control unit 54 of the server 5.

The JAVA program 91 receives via the user interface of the terminal 9 a request to actuate the monitoring service. This request might already contain addresses of the selected sending terminal and/or the selected receiving terminal. It might also be possible, that a list of available sending terminals and of available receiving terminals is displayed under control of the JAVA program 91 and that one or several of such displayed terminals are selected by help of the user interface of the requesting terminal 9. The displayed or entered addresses can be logical addresses which might be self-defined by the user. But, it is also possible that these addresses are physical addresses of the respective terminals.

The addresses of available sending and receiving terminals are stored on the SIM-card 93. It is also possible that these addresses are stored in a memory of the data processing unit 90, in particular in a permanent memory of the data processing unit 90.

According to a further embodiment of the invention, these addresses are stored in the data base 56 of the server 5 and are transmitted on request of the JAVA program 91 from the server 5 via the communication networks 1 and 7 to the JAVA program 91.

The control unit 54 comprises a set of functions 57 which are responsible for checking the authorization of a requesting terminal to access the data stream generated by the sending terminal.

### There exist several possibilities to perform such a check:

According to a preferred embodiment of the invention, the already available authorization procedures executed between the requesting terminal 9 and the mobile communication network 7 are used to support this authorization check. The first time the requesting terminal 9 accesses the communication service provided by the mobile communication network 9, an authorization procedure is executed between the requesting terminal 9 and the mobile communication network 7. By help of the IMSI and the encryption keys stored on the SIM-card 93, the identity and the authorization of the requesting terminal 9 is checked by the HLR-functionality of the mobile communication network 7 (HLR = Home Location Register). In the following, the authorization of the requesting terminal 9 is permanently checked by help of the so-called TIMSI which is used to encrypt the data exchange between the requesting terminal 9 and the mobile communication network 7.

Following, the identity of the user of the requesting terminal is already determined by the mobile communication network 7 by help of the above described authorization procedure executed between the requesting terminal 9 and the communication network 7, which is the access network used by the requesting terminal for communicating with the server 5. The results of this authorization procedure are used within a second authorization procedure executed between the gateway 8 and the server 5.

Within this second authorization procedure, authorization and identification data, which identifies and authorize the gateway 8 towards the server 5, are exchanged between the gateway 8 and a function 57 of the control unit 54. Such an authorization procedure is performed, for example, by help of asymmetric keys, a public key and a secret key, which are used to encrypt a random number transmitted from the server 5 to the gateway 8 for authorization.

After the determination of the identity of the gateway 8, the gateway 8 identifies the requested terminal 9 towards the server 5.

Consequently, a two step authorization procedure is used for identifying the requesting terminal 1 towards the server 5: a first authorization procedure which generally identifies the gateway 8 towards the server 5 and enables the server 5 to trust to identification data of requesting terminals received from the gateway 8; and a second authorization procedure executed between the requesting terminal 9 and the mobile communication network 7 to check the identity of the requesting terminal 9 and make sure that only already checked identification data are transmitted to the server 5.

It is also possible to execute an end-to-end authorization procedure between the requesting terminal 9 and the server 5. This authorization procedure may base on passwords, pin codes or asymmetric keys which are used to identify the requesting terminal towards the server 5. According to a preferred embodiment of this invention, these additional data are stored on the SIM-card 93.

Further, it is possible to combine the above described end-to-end authorization procedure and the above described two step authorization procedure.

The function 57 determines by help of the above described methods the identity of the requesting terminal 9. Then, it checks whether the identified requesting terminal has the right to access the data stream generated by the sending terminal and specified in the request received from this requesting terminal. This check is performed by help of accessing the data base 56.

The data base 56 contains data which assign access rights to terminals. It contains a list of available sending terminals and receiving terminals and associates requesting terminals.

According to a preferred embodiment of the invention, the data base 56 contains for each requesting terminal a subscriber data set which contains links to sending terminal data sets and receiving terminal data sets. The sending terminal data sets and receiving terminal data sets contain information about the respective sending terminals and receiving terminals, for example, the logical and physical address of such terminals.

A subscriber can add further sending terminals and receiving terminals to the data base 56 by help of a registration process. Further, it is possible that the data base 56 only contains data about sending terminals. In this case, the address of a selected receiving terminal is transmitted from the requesting terminal to the server 5.

A further authorization procedure is executed between the server 5 and the selected sending terminal. The above described methods can be used by the server 5 and the sending terminal 4 to perform such an authorization procedure.

If the control unit 54 determines that the requesting terminal has the authorization to access the data stream generated by the sending terminal, it initiates the establishment of a connection between this sending terminal and the selected receiving terminal by help of the control unit 55. If not, it denies the establishment of such a connection and replies an appropriate message to the requesting terminal 9.

The control unit 55 controls one or several processes, each of which is responsible for an established connection between a sending terminal and a receiving terminal. For example, fig. 2 shows three such processes, the processes 58, 59 and 60. Each time, the control unit 54 initiates the establishment of a connection between a sending terminal and a receiving terminal, the control unit 55 generates such an associated process.

By way of example, the functions performed by the process 60 are described in the following:

The process 60 sends a control message to the sending terminal 4 which requests the transmission of a data stream containing audio and/or video data to the receiving terminal 6. This data stream could be transmitted over a pure packet switched virtual connection arranged between the sending terminal 4 and the receiving terminal 6. Further, protocols could be used which guarantee a specific bandwidth, for example, by help of the RTP-protocol (RTP = Real Time Protocol). Further, it is possible that the process 60 controls the establishment of a circuit switched connection between the sending terminal 4 and the receiving terminal 6.

According to a further embodiment, the process 60 initiates the establishment of a connection between the sending terminal 4 and the server 5 or, it requests from the sending terminal 4 to transmit the data stream to the server 5. Further, the process 60 controls the forwarding of the data stream received from the server 5 to the receiving terminal 6. Such kind of solution is of particular interest, when the communication network 3 is a cable network and the server 5 is a server which provides services for the communication network 3.

## Claims

1. A method for monitoring an object or person by means of transmitting an audio and/or video data stream via a communication network (2, 3) using an internet protocol from a sending terminal (4) to a selected receiving terminal (6), whereby the receiving terminal (6) is a TV set which is connected via a Set Top Box with the communication network (3), whereby
a requesting terminal (9) sends a request to a server (5), wherein the request requests the transmission of said audio and/or video data stream from said sending terminal (4) to said selected receiving terminal (6), and the server (5) establishes the connection between said sending terminal (4) and said selected receiving terminal (6) for transmitting of said audio and/or video data stream from said sending terminal (4) to said selected receiving terminal (6),
**characterized in that,**
the requesting terminal (9) is separate from the receiving terminal (6);
a first authorization procedure for identifying the requesting terminal (9) is executed between the requesting terminal (9) and an access network (7), the requesting terminal (9) being a mobile phone and the access network (7) being a mobile communication network, used by the requesting terminal (9) for communicating with the server (5); results of said first authorization procedure within a second authorization procedure executed between the access network (7) and the server (5) are used, the server (5) checks whether the requesting terminal (9) is authorized to access the data stream generated by the sending terminal (4) for initiating the establishment of a connection between the sending terminal (4) and the selected receiving terminal (6); and
an authorization procedure is executed between the server (5) and the sending terminal (4) for authorizing the server (5) to establish the connection between said sending terminal (4) and said selected receiving terminal (6).

2. The method for monitoring of claim 1,
**characterized in that,**
an authorization procedure is executed between the requesting terminal (9) and the server (5) based on authorization data stored on a SIM-Card (93) assigned to the requesting terminal (9).

3. The method for monitoring an object or person of claim 1,
**characterized in that,**
addresses of sending terminals (4) and/or receiving terminals (6) are stored on a SIM-Card (93) assigned to the requesting terminal (9); and the requesting terminal (9) sends selective ones of these addresses to the server (5).

4. The method for monitoring an object or person of claim 1,
**characterized in that,**
addresses of sending terminals (4) and/or receiving terminals (6) are stored in the server (5) and selected by means of the requesting terminal (9).

5. A server (5) for supporting the monitoring of objects or persons by means of transmitting audio and/or video data streams via a communication network (2, 3) using an internet protocol from sending terminals (4) to selected receiving terminals (6), whereby the receiving terminals (6) are TV sets which are connected via Set Top Boxes with the communication network (3),
whereby the server comprises a data processing unit (50) and a communication interface (61),
**characterized in that,**
the data processing unit (50) and the communication interface (61) are adapted for executing the method according to one of the claims 1 to 4.

6. A terminal (9), which is a mobile phone, used for controlling the monitoring of persons by means of transmitting audio or video data streams via a communication network (2, 3) using an internet protocol from a sending terminal (4) to selected receiving terminals (6),
wherein the terminal (9) comprises a data processing unit (90) and a communication interface (95),
**characterized in that,**
the data processing unit (90) and the communication interface (95) are
adapted for executing the method according to one of the claims 1 to 4.

7. The terminal according to claim 6,
**characterized in that**,
the requesting terminal (9) comprises a program (91) encoded in a platform independent programming language controlling the interaction with the server (5).

## Patentansprüche

1. Verfahren zum Überwachen eines Objektes oder einer Person durch Übertragen eines Audio- und/oder Videodatenstroms unter Verwendung eines Internet-Protokolls über ein Kommunikationsnetzwerk (2, 3) von einem Sendeendgerät (4) an ein ausgewähltes Empfangsendgerät (6), wobei das Empfangsendgerät (6) ein Fernsehgerät ist, welches über eine Set-Top-Box mit dem Kommunikationsnetzwerk (3) verbunden ist, wobei ein anforderndes Endgerät (9) eine Anforderung an einen Server (5) sendet, wobei die Anforderung die Übertragung des besagten Audio- und/oder Videodatenstroms von dem besagten Sendeendgerät (4) an das besagte ausgewählte Empfangsendgerät (6) anfordert und der Server (5) die Verbindung zwischen dem besagten Sendeendgerät (4) und dem besagten Empfangsendgerät (6) für die Übertragung des besagten Audio-und/oder Videodatenstroms von dem besagten Sendeendgerät (4) an das besagte ausgewählte Empfangsendgerät (6) herstellt,
**dadurch gekennzeichnet, dass**
das anfordernde Endgerät (9) von dem Empfangsendgerät (6) separat ist;
eine erste Berechtigungsprozedur zum Identifizieren des anfordernden Endgeräts (9) zwischen dem anfordernden Endgerät (9) und einem Zugangsnetzwerk (7) ausgeführt wird, wobei das anfordernde Endgerät (9) ein Mobiltelefon und das Zugangsnetzwerk (7) ein von dem anfordernden Endgerät (9) für die Kommunikation mit dem Server benutztes mobiles Kommunikationsnetzwerk ist; wobei die Ergebnisse der besagten ersten Berechtigungsprozedur für eine zweite zwischen dem Zugangsnetzwerk (7) und dem Server (5) ausgeführte Berechtigungsprozedur verwendet werden, wobei der Server (5) prüft, ob das anfordernde Endgerät (9) berechtigt ist, auf den von dem Sendeendgerät (4) erzeugten Datenstrom zum Initiieren der Herstellung einer Verbindung zwischen dem Sendeendgerät (4) und dem ausgewählten Empfangsendgerät (6) zuzugreifen; und
eine Berechtigungsprozedur zwischen dem Server (5) und dem Sendeendgerät (4) ausgeführt wird, um den Server (5) zu berechtigen, die Verbindung zwischen dem besagten Sendeendgerät (4) und dem besagten ausgewählten Empfangsendgerät (6) herzustellen.

2. Verfahren zum Überwachen nach Anspruch 1.
**dadurch gekennzeichnet, dass**
eine Berechtigungsprozedur, basierend auf auf einer dem anfordernden Endgerät (9) zugewiesenen SIM-Karte (99) gespeicherten Berechtigungsdaten, zwischen dem anfordernden Endgerät (9) und dem Server (5) ausgeführt wird.

3. Verfahren zum Überwachen eines Objektes oder einer Person nach Anspruch 1,
**dadurch gekennzeichnet, dass**
Adressen von Sendeendgeräten (4) und/oder Empfangsendgeräten (6) auf einer dem anfordernden Endgerät (9) zugewiesenen SIM-Karte (93) gespeichert werden; und dass das anfordernde Endgerät (9) ausgewählte dieser Adressen an den Server (5) sendet.

4. Verfahren zum Überwachen eines Objektes oder einer Person nach Anspruch 1,
**dadurch gekennzeichnet, dass**
Adressen von Sendeendgeräten (4) und/oder Empfangsendgeräten (6) im Server (5) gespeichert und anhand des anfordernden Endgerät (9) ausgewählt werden.

5. Server (5) zum Unterstützen der Überwachung von Objekten oder Personen durch Übertragen von Audio- und/oder Videodatenströmen unter Verwendung eines Internet-Protokolls über ein Kommunikationsnetzwerk (2, 3) von Sendeendgeräten (4) an ausgewählte Empfangsendgeräte (6), wobei die Empfangsendgeräte (6) Fernsehgeräte sind, die über Set-Top-Boxen mit dem Kommunikationsnetzwerk (3) verbunden sind, wobei der Server eine Datenverarbeitungseinheit (50) und eine Kommunikationsschnittstelle (61) umfasst,
**dadurch gekennzeichnet, dass**
die Datenverarbeitungseinheit (50) und die Kommunikationsschnittstelle (61) für das Durchführen des Verfahrens gemäß einem der Ansprüche 1 bis 4 ausgelegt sind.

6. Endgerät (9), welches ein Mobiltelefon ist und für die Steuerung der Überwachung von Personen durch Übertragen von Audio- oder Videodatenströmen unter Verwendung eines Internet-Protokolls über ein Kommunikationsnetzwerk (2, 3) von einem Sendeendgerät (4) an ausgewählte Empfangsendgeräte (6) verwendet wird,
wobei das Endgerät (9) eine Datenverarbeitungseinheit (90) und eine Kommunikationsschnittstelle (95) umfasst,
**dadurch gekennzeichnet, dass**
die Datenverarbeitungseinheit (90) und die Kommunikationsschnittstelle (95) für das Durchführen des Verfahrens gemäß einem der Ansprüche 1 bis 4 ausgelegt sind.

7. Endgerät nach Anspruch 6,
**dadurch gekennzeichnet, dass**
das anfordernde Endgerät (9) ein in einer plattformunabhängigen Programmiersprache codiertes Programm (91), welches das Zusammenwirken mit dem Server (5) steuert, enthält.

## Revendications

1. Procédé pour surveiller un objet ou une personne au moyen de la transmission d'un flux de données audio et/ou vidéo par l'intermédiaire d'un réseau de communication (2, 3) utilisant un protocole Internet depuis un terminal émetteur (4) vers un terminal récepteur (6) sélectionné, le terminal récepteur (6) étant un poste de télévision qui est connecté par l'intermédiaire d'un boîtier décodeur au réseau de communication (3), au moyen duquel
un terminal demandeur (9) envoie une demande à un serveur (5), dans lequel la demande demande la transmission dudit flux de données audio et/ou vidéo depuis ledit terminal émetteur (4) vers ledit terminal récepteur (6) sélectionné, et le serveur (5) établit la connexion entre ledit terminal émetteur (4) et ledit terminal récepteur (6) sélectionné pour transmettre ledit flux de données audio et/ou vidéo depuis ledit terminal émetteur (4) vers ledit terminal récepteur (6) sélectionné,
**caractérisé en ce que**,
le terminal demandeur (9) est séparé du terminal récepteur (6) ;
une première procédure d'autorisation pour identifier le terminal demandeur (9) est exécutée entre le terminal demandeur (9) et un réseau d'accès (7), le terminal demandeur (9) étant un téléphone mobile et le réseau d'accès (7) étant un réseau de communication mobile, utilisé par le terminal demandeur (9) pour communiquer avec le serveur (5) ; des résultats de ladite première procédure d'autorisation à l'intérieur d'une deuxième procédure d'autorisation exécutée entre le réseau d'accès (7) et le serveur (5) sont utilisés, le serveur (5) vérifie si le terminal demandeur (9) est autorisé à accéder au flux de données généré par le terminal émetteur (4) pour initier l'établissement d'une connexion entre le terminal émetteur (4) et le terminal récepteur (6) sélectionné ; et
une procédure d'autorisation est exécutée entre le serveur (5) et le terminal émetteur (4) pour autoriser le serveur (5) à établir la connexion entre ledit terminal émetteur (4) et ledit terminal récepteur (6) sélectionné.

2. Procédé de surveillance selon la revendication 1,
**caractérisé en ce que**,
une procédure d'autorisation est exécutée entre le terminal demandeur (9) et le serveur (5) sur la base de données d'autorisation stockées sur une carte SIM (93) attribuée au terminal demandeur (9).

3. Procédé de surveillance d'un objet ou d'une personne selon la revendication 1,
**caractérisé en ce que**,
des adresses de terminaux émetteurs (4) et/ou de terminaux récepteurs (6) sont stockées sur une carte SIM (93) attribuée au terminal demandeur (9) ; et le terminal demandeur (9) envoie des adresses sélectionnées parmi ces adresses au serveur (5).

4. Procédé de surveillance d'un objet ou d'une personne selon la revendication 1,
**caractérisé en ce que**
des adresses de terminaux émetteurs (4) et/ou de terminaux récepteurs (6) sont stockées dans le serveur (5) et sélectionnées au moyen du terminal demandeur (9).

5. Serveur (5) pour prendre en charge la surveillance des objets ou des personnes au moyen de la transmission de flux de données audio et/ou vidéo par l'intermédiaire d'un réseau de communication (2, 3) utilisant un protocole Internet depuis des terminaux émetteurs (4) vers des terminaux récepteurs (6) sélectionnés, les terminaux récepteurs (6) étant des postes de télévision qui sont connectés par l'intermédiaire de boîtiers décodeurs au réseau de communication (3),
le serveur comprenant une unité de traitement de données (50) et une interface de communication (61),
**caractérisé en ce que**,
l'unité de traitement de données (50) et l'interface de communication (61) sont adaptées pour exécuter le procédé selon l'une des revendications 1 à 4.

6. Terminal (9), qui est un téléphone mobile, utilisé pour commander la surveillance des personnes au moyen de la transmission de flux de données audio ou vidéo par l'intermédiaire d'un réseau de communication (2, 3) utilisant un protocole Internet depuis un terminal émetteur (4) vers des terminaux récepteurs (6) sélectionnés,
dans lequel le terminal (9) comprend une unité de traitement de données (90) et une interface de communication (95),
**caractérisé en ce que**,
l'unité de traitement de données (90) et l'interface de communication (95) sont adaptées pour exécuter le procédé selon l'une des revendications 1 à 4.

7. Terminal selon la revendication 6,
**caractérisé en ce que**,
le terminal demandeur (9) comprend un programme (91) codé dans un langage de programmation indépendant de la plate-forme commandant l'interaction avec le serveur (5).
